# EUROPEAN PATENT APPLICATION

(11) **EP 4 332 996 A1**
(43) Date of publication of application: **06.03.2024**
(21) Application number: 23193894.5
(22) Date of filing: 29.08.2023
(51) Int. Cl.: H01B 7/18, B60R 16/02, F16L 3/137, H01B 13/012

(54) **WIRE HARNESS**

(30) Priority: 05.09.2022 JP 2022140443
(71) Applicant: Yazaki Corporation, Tokyo, 108-0075 (JP); TOYOTA JIDOSHA KABUSHIKI KAISHA, Toyota-shi, Aichi-ken, 471 8571 (JP)
(72) Inventor: Hara, Motoya, Toyota-shi, Aichi-ken, 471-8571 (JP); Ishikawa, Tatsuya, Toyota-shi, Aichi-ken, 471-8571 (JP); Kashino, Yuichi, Toyota-shi, Aichi-ken, 471-8571 (JP); Murao, Yasuaki, Toyota-shi, Aichi, 470-1294 (JP); Takahashi, Hiroyuki, Toyota-shi, Aichi, 470-1294 (JP)
(74) Representative: Grünecker Patent- und Rechtsanwälte PartG mbB

(57) **Abstract**

A wire harness includes: an electric wire (10); a first tape wrapping body (20) in which a first adhesive tape (21) is wrapped around a first electric wire portion (11) of a first wrapping section (10b) directed to one side from a base point (10a) in an axial direction of the electric wire (10); and a second tape wrapping body (30) in which a second adhesive tape (31) is wrapped around a second electric wire portion (12) of a second wrapping section (10c) directed to another side from the base point (10a) in the axial direction of the electric wire (10).

## Description

### BACKGROUND OF THE INVENTION

### 1. Field of the Invention

The present invention relates to a wire harness.

### 2. Description of the Related Art

A wire harness, which is routed through a vehicle through various paths, is sometimes bent in the middle of the path (for example, Japanese Patent Publication Laid-open No. 2021-19386).

In that connection, before being assembled to a structure such as a vehicle body, the wire harness is formed into a rough provisional routing shape along a path after assembly in some cases. Meanwhile, in the wire harness, to protect an electric wire from a peripheral component such as the structure, the electric wire is covered with a hard exterior member such as a corrugated tube in some cases. Therefore, in a conventional wire harness, even when trying to create a provisional routing shape in advance along the path after assembly, since restoring force of the exterior member from the bending shape is superior to holding power of the bending shape of the electric wire, the provisional shape cannot be maintained until assembly to the structure begins.

### SUMMARY OF THE INVENTION

Therefore, an object of the present invention is to provide a wire harness capable of maintaining the provisional routing shape before assembly.

A wire harness according to one aspect of the present invention includes an electric wire; a first tape wrapping body in which a first adhesive tape is wrapped around a first electric wire portion of a first wrapping section directed to a one side from a base point in an axial direction of the electric wire; and a second tape wrapping body in which a second adhesive tape is wrapped around a second electric wire portion of a second wrapping section directed to another side from the base point in the axial direction of the electric wire, wherein the first tape wrapping body is formed such that first restoring force for restoring from a bending shape, which is formed by integrating the first tape wrapping body and the first electric wire portion in the first wrapping section, to a shape before bending is larger than holding power to keep the electric wire, as a single body, in the bending shape, and the second tape wrapping body is formed such that second restoring force for restoring from a bending shape, which is formed by integrating the second tape wrapping body and the second electric wire portion in the second wrapping section, to a shape before bending is smaller than the holding power.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a plan view illustrating a wire harness of an embodiment;
FIG. 2 is a plan view illustrating the wire harness of the embodiment after bending;
FIG. 3 is a plan view illustrating a wire harness of modification 1;
FIG. 4 is a plan view illustrating the wire harness of modification 1 after bending;
FIG. 5 is a plan view illustrating a wire harness of modification 2;
FIG. 6 is a plan view illustrating the wire harness of modification 2 after bending;
FIG. 7 is a plan view illustrating a wire harness of modification 3; and
FIG. 8 is a plan view illustrating the wire harness of modification 3 after bending.

### DETAILED DESCRIPTION OF THE PREFERRED EMBODIMENTS

An embodiment of a wire harness according to the present invention will be described in detail below with reference to the drawings. Note that this invention is not limited by this embodiment.

### Embodiment

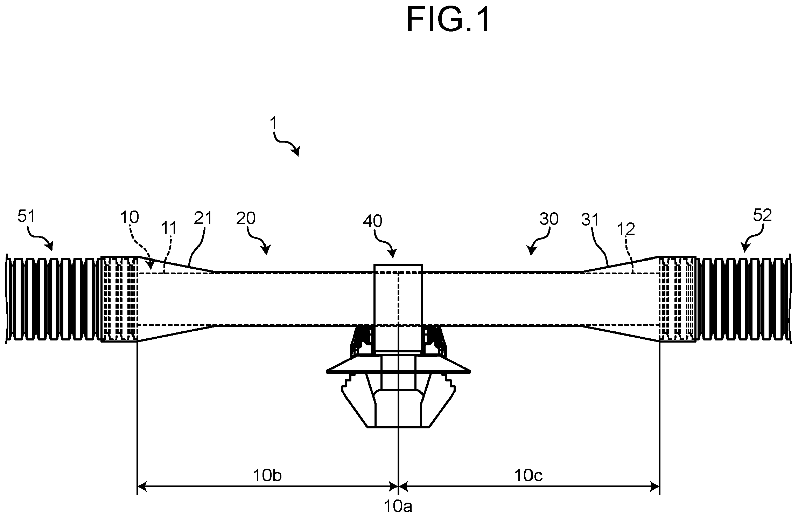

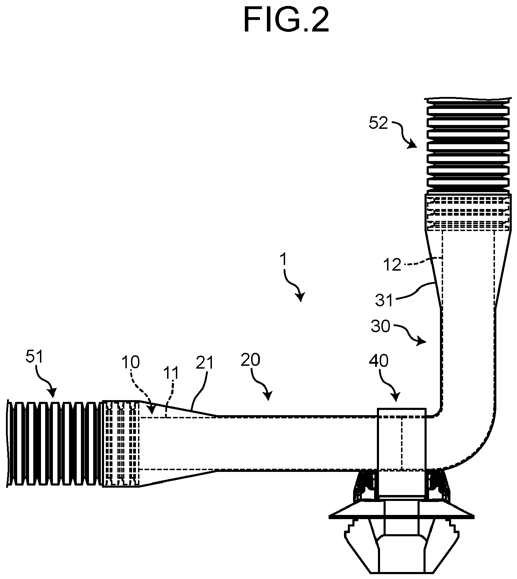

One embodiment of the wire harness according to the present invention will be described with reference to FIGS. 1 and 2.

Reference sign 1 in FIGS. 1 and 2 indicates the wire harness of the present embodiment. The wire harness 1 is, for example, routed along a structure such as a vehicle body of a vehicle, and fixed to the structure on the routing path.

The wire harness 1 includes an electric wire (electric wire as a communication wire, electric wire as a power wire, and the like) 10 (FIGS. 1 and 2). The electric wire 10 illustrated here refers to one electric wire or a bundle of electric wires in which a plurality of electric wires is bundled.

In the wire harness 1, a first adhesive tape 21 is wrapped around a first wrapping section 10b directed to one side from a base point 10a in the axial direction of the electric wire 10, and a second adhesive tape 31 is wrapped around a second wrapping section 10c directed to the other side from the base point 10a in the axial direction of the electric wire 10 (FIGS. 1 and 2). Therefore, the wire harness 1 includes a first tape wrapping body 20 in which the first adhesive tape 21 is wrapped around a first electric wire portion 11 of the first wrapping section 10b of the electric wire 10, and a second tape wrapping body 30 in which the second adhesive tape 31 is wrapped around a second electric wire portion 12 of the second wrapping section 10c of the electric wire 10 (FIGS. 1 and 2).

Here, the base point 10a of the electric wire 10 refers to a place that serves as a mark during electric wire bending work at a location that is a bending point on the routing path of the wire harness 1. Before assembly to the structure, the wire harness 1 is formed into a rough provisional routing shape along the path after assembly. When making the provisional routing shape of the wire harness 1, the electric wire 10 is bent by using the base point 10a as a mark. Therefore, since the wire harness 1 is assembled to the structure in a state of provisional shape, it is necessary to maintain the provisional routing shape until the assembly to the structure begins. Therefore, in the wire harness 1, the first tape wrapping body 20 and the second tape wrapping body 30 are configured as follows to maintain the bending shape of the electric wire 10 executed using the base point 10a in the provisional routing shape as a mark.

First, the first tape wrapping body 20 is formed such that restoring force for restoring from the bending shape, which is formed by integrating the first tape wrapping body 20 and the first electric wire portion 11 in the first wrapping section 10b, to the shape before bending (hereinafter referred to as "first restoring force") is greater than holding power to keep the electric wire 10, as a single body, in the bending shape. Next, the second tape wrapping body 30 is formed such that restoring force for restoring from the bending shape, which is formed by integrating the second tape wrapping body 30 and the second electric wire portion 12 in the second wrapping section 10c, to the shape before bending (hereinafter referred to as "second restoring force") is smaller than the holding power to keep the electric wire 10, as a single body, in the bending shape.

In the wire harness 1, even if the first tape wrapping body 20 and the first electric wire portion 11 are bent from the shape before bending in the first wrapping section 10b, since the first restoring force is greater than the holding power of the electric wire 10 as a single body, the first tape wrapping body 20 and the first electric wire portion 11 attempt to return from the bending shape to the shape before bending. Meanwhile, in the wire harness 1, if the second tape wrapping body 30 and the second electric wire portion 12 are bent from the shape before bending in the second wrapping section 10c, since the second restoring force is smaller than the holding power of the electric wire 10 as a single body, the second tape wrapping body 30 and the second electric wire portion 12 are kept in the bending shape (FIG. 2). Therefore, by using the base point 10a as a mark and bending the second tape wrapping body 30 and the second electric wire portion 12 in the second wrapping section 10c, the wire harness 1 can continue to maintain the bending shape until the assembly to the structure begins. In this exemplification, the second tape wrapping body 30 and the second electric wire portion 12 are bent at the end on the base point 10a side in the second wrapping section 10c.

In the wire harness 1, the first adhesive tape 21 may be wrapped around the first wrapping section 10b and the end on the base point 10a side of the second wrapping section 10c, and the second adhesive tape 31 may be wrapped around the second wrapping section 10c and the end on the base point 10a side of the first wrapping section 10b.

Furthermore, the wire harness 1 may include a clamp 40 assembled to the base point 10a of the electric wire 10 (FIGS. 1 and 2). The clamp 40 is an identification part for facilitating determination of the position of the base point 10a. In the wire harness 1, the position of the base point 10a can be determined by using the clamp 40 as a mark, facilitating the bending work of the second tape wrapping body 30 and the second electric wire portion 12 in the second wrapping section 10c.

Furthermore, the wire harness 1 may include: a first exterior member 51, which is harder than the first adhesive tape 21 and the second adhesive tape 31, and houses one side of the electric wire 10 with respect to the first electric wire portion 11 in the axial direction; and a second exterior member 52, which is harder than the first adhesive tape 21 and the second adhesive tape 31, and houses the other side of the electric wire 10 with respect to the second electric wire portion 12 in the axial direction (FIGS. 1 and 2). The first exterior member 51 is a component which one side of the electric wire 10 with respect to the first electric wire portion 11 from a peripheral component protects. The second exterior member 52 is a component which the other side of the electric wire 10 with respect to the second electric wire portion 12 from a peripheral component protects. Here, a corrugated tube is used for the first exterior member 51 and the second exterior member 52.

When the wire harness 1 is provided with the first exterior member 51, the first adhesive tape 21 is wrapped around the first electric wire portion 11 and an outer peripheral wall at the end on the first electric wire portion 11 side in the first exterior member 51 (FIGS. 1 and 2). When the wire harness 1 is provided with the second exterior member 52, the second adhesive tape 31 is wrapped around the second electric wire portion 12 and an outer peripheral wall at the end on the second electric wire portion 12 side in the second exterior member 52 (FIGS. 1 and 2).

Specifically, in the wire harness 1 of the present embodiment, a vinyl tape is used for the first adhesive tape 21, and a nonwoven tape is used for the second adhesive tape 31. Here, the first adhesive tape (vinyl tape) 21 having a tape width of at least the length of the first wrapping section 10b and the second adhesive tape (nonwoven tape) 31 having a tape width of at least the length of the second wrapping section 10c are used (FIGS. 1 and 2).

In the wire harness 1, the first adhesive tape (vinyl tape) 21 is wrapped in a full wrap state with the number of turns of at least one or more turns that allow generation of the first restoring force, and the second adhesive tape (nonwoven tape) 31 is wrapped in a full wrap state with the number of turns of at least one or more turns that allow generation of the second restoring force (FIGS. 1 and 2). For example, in the wire harness 1, the first adhesive tape (vinyl tape) 21 is wrapped in a full wrap state with the number of turns that allows generation of the first restoring force. In the wire harness 1, the second adhesive tape (nonwoven tape) 31 is wrapped in a full wrap state with the same number of turns as in the first adhesive tape (vinyl tape) 21. The wire harness 1 includes the first tape wrapping body 20 in which the first adhesive tape (vinyl tape) 21 having a tape width of at least the length of the first wrapping section 10b is wrapped with the number of turns that allows generation of the first restoring force, and the second tape wrapping body 30 in which the second adhesive tape (nonwoven tape) 31 having a tape width of at least the length of the second wrapping section 10c is wrapped with the number of turns that allows generation of the second restoring force.

In this exemplified wire harness 1, the first adhesive tape (vinyl tape) 21 having a tape width wider than the length of the first wrapping section 10b is used, and the first adhesive tape (vinyl tape) 21 is wrapped around the first electric wire portion 11 and the outer peripheral wall at the end on the first electric wire portion 11 side of the first exterior member 51 in a full wrap state with the number of turns that allows generation of the first restoring force (FIGS. 1 and 2). In this exemplified wire harness 1, the second adhesive tape (nonwoven tape) 31 having a tape width wider than the length of the second wrapping section 10c is used, and the second adhesive tape (nonwoven tape) 31 is wrapped around the second electric wire portion 12 and the outer peripheral wall at the end on the second electric wire portion 12 side of the second exterior member 52 in a full wrap state with the number of turns that allows generation of the second restoring force (FIGS. 1 and 2).

As described above, since the bending shape is kept in the second wrapping section 10c until the assembly to the structure begins, the wire harness 1 according to the present modification can maintain the provisional routing shape before assembly.

### Modification 1

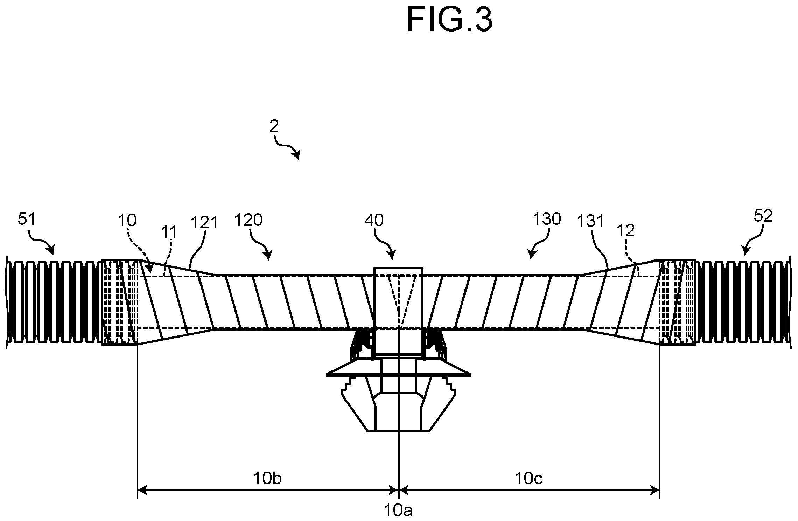

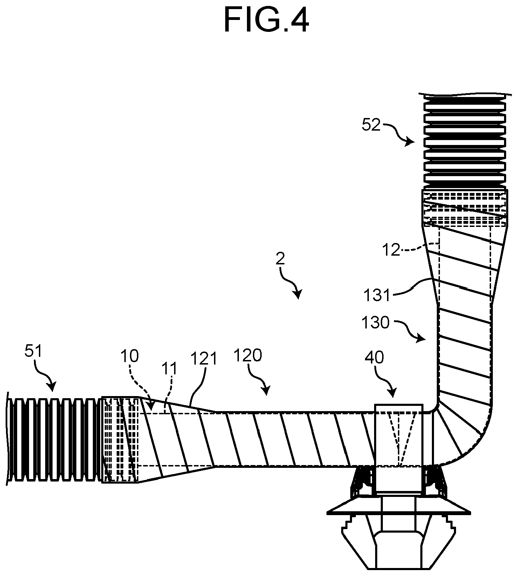

In a wire harness 2 of the present modification, the first tape wrapping body 20 and the second tape wrapping body 30 are replaced with a first tape wrapping body 120 and a second tape wrapping body 130, respectively, in the wire harness 1 of the embodiment described above (FIGS. 3 and 4).

In the first tape wrapping body 120 of the present modification, a first adhesive tape 121 is wrapped around the first electric wire portion 11 of the first wrapping section 10b, as in the first tape wrapping body 20 of the embodiment described above (FIGS. 3 and 4). As in the first tape wrapping body 20 of the embodiment, the first tape wrapping body 120 is formed such that the first restoring force for restoring from the bending shape, which is formed by integrating the first tape wrapping body 120 and the first electric wire portion 11 in the first wrapping section 10b, to the shape before bending is greater than the holding power to keep the electric wire 10, as a single body, in the bending shape.

The first adhesive tape 121 of the present modification is a vinyl tape, as in the first adhesive tape 21 of the embodiment described above. However, the first adhesive tape (vinyl tape) 121 of the present modification may have a tape width of at least the length of the first wrapping section 10b as in the first adhesive tape (vinyl tape) 21 of the embodiment, and may have a tape width narrower than the length of the first wrapping section 10b. The first adhesive tape (vinyl tape) 121 of the present modification is wrapped in layers in the wrap amount that allows generation of the first restoring force. The wrap amount is the prescribed wrap amount stipulated in designing the wire harness 2, and is, for example, 1/4, 1/2 (so-called half wrap), and 3/4 of the tape width of the first adhesive tape (vinyl tape) 121. In this way, the wire harness 2 of the present modification includes the first tape wrapping body 120 in which the first adhesive tape (vinyl tape) 121 is wrapped in layers in the wrap amount that allows generation of the first restoring force.

In the second tape wrapping body 130 of the present modification, a second adhesive tape 131 is wrapped around the second electric wire portion 12 of the second wrapping section 10c, as in the second tape wrapping body 30 of the embodiment described above (FIGS. 3 and 4). As in the second tape wrapping body 30 of the embodiment, the second tape wrapping body 130 is formed such that the second restoring force for restoring from the bending shape, which is formed by integrating the second tape wrapping body 130 and the second electric wire portion 12 in the second wrapping section 10c, to the shape before bending is smaller than the holding power to keep the electric wire 10, as a single body, in the bending shape.

The second adhesive tape 131 of the present modification is a nonwoven tape, as in the second adhesive tape 31 of the embodiment described above. However, the second adhesive tape (nonwoven tape) 131 of the present modification may have a tape width of at least the length of the second wrapping section 10c as in the second adhesive tape (nonwoven tape) 31 of the embodiment, and may have a tape width narrower than the length of the second wrapping section 10c. The second adhesive tape (nonwoven tape) 131 of the present modification is wrapped in layers in the wrap amount that allows generation of the second restoring force. The wrap amount is the prescribed wrap amount stipulated in designing the wire harness 2, and is, for example, 1/4, 1/2 (so-called half wrap), and 3/4 of the tape width of the second adhesive tape (nonwoven tape) 131. In this way, the wire harness 2 of the present modification includes the second tape wrapping body 130 in which the second adhesive tape (nonwoven tape) 131 is wrapped in layers in the wrap amount that allows generation of the second restoring force. For example, in the second tape wrapping body 130, the second adhesive tape (nonwoven tape) 131 is wrapped in layers in the same wrap amount as the first adhesive tape (vinyl tape) 121.

In the wire harness 2 of the present modification, as in the wire harness 1 of the embodiment described above, even if the first tape wrapping body 120 and the first electric wire portion 11 are bent from the shape before bending in the first wrapping section 10b, since the first restoring force is greater than the holding power of the electric wire 10 as a single body, the first tape wrapping body 120 and the first electric wire portion 11 attempt to return from the bending shape to the shape before bending. In the wire harness 2, as in the wire harness 1 of the embodiment described above, if the second tape wrapping body 130 and the second electric wire portion 12 are bent from the shape before bending in the second wrapping section 10c, since the second restoring force is smaller than the holding power of the electric wire 10 as a single body, the second tape wrapping body 130 and the second electric wire portion 12 are kept in the bending shape. Therefore, by using the base point 10a as a mark and bending the second tape wrapping body 130 and the second electric wire portion 12 in the second wrapping section 10c, the wire harness 2 can continue to maintain the bending shape until the assembly to the structure begins (FIG. 4). In this exemplification, the second tape wrapping body 130 and the second electric wire portion 12 are bent at the end on the base point 10a side in the second wrapping section 10c.

As described above, in the wire harness 2 of the present modification, the first tape wrapping body 20 and the second tape wrapping body 30 are replaced with the first tape wrapping body 120 and the second tape wrapping body 130, respectively, in the wire harness 1 of the embodiment described above, and the same effect as in the wire harness 1 can be obtained.

Here, in the exemplified wire harness 2, the first adhesive tape (vinyl tape) 121 having a tape width narrower than the length of the first wrapping section 10b and the second adhesive tape (nonwoven tape) 131 having a tape width narrower than the length of the second wrapping section 10c are used (FIGS. 3 and 4). Furthermore, in the exemplified wire harness 2, the first adhesive tape (vinyl tape) 121 and the second adhesive tape (nonwoven tape) 131 having the same tape width are used (FIGS. 3 and 4). In the exemplified wire harness 2, the first adhesive tape (vinyl tape) 121 is wrapped in layers around the first electric wire portion 11 and the outer peripheral wall at the end on the first electric wire portion 11 side in the first exterior member 51 in the wrap amount that allows generation of the first restoring force, and the second adhesive tape (nonwoven tape) 131 is wrapped in layers around the second electric wire portion 12 and the outer peripheral wall at the end on the second electric wire portion 12 side in the second exterior member 52 in the wrap amount that allows generation of the second restoring force (FIGS. 3 and 4).

### Modification 2

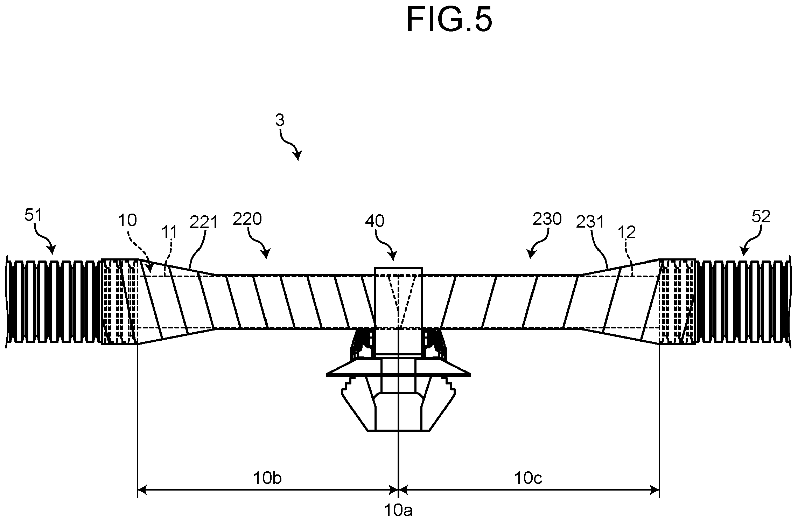

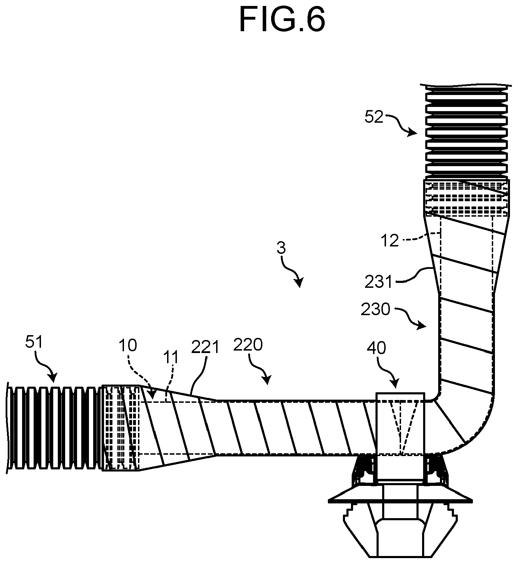

In a wire harness 3 of the present modification, the first tape wrapping body 20 and the second tape wrapping body 30 are replaced with a first tape wrapping body 220 and a second tape wrapping body 230, respectively, in the wire harness 1 of the embodiment described above (FIGS. 5 and 6) .

In the first tape wrapping body 220 of the present modification, a first adhesive tape 221 is wrapped around the first electric wire portion 11 of the first wrapping section 10b, as in the first tape wrapping body 20 of the embodiment described above (FIGS. 5 and 6). As in the first tape wrapping body 20 of the embodiment, the first tape wrapping body 220 is formed such that the first restoring force from the bending shape, which is formed by integrating the first tape wrapping body 220 and the first electric wire portion 11 in the first wrapping section 10b, to the shape before bending is greater than the holding power to keep the electric wire 10, as a single body, in the bending shape.

The first adhesive tape 221 of the present modification is a vinyl tape, as in the first adhesive tape 21 of the embodiment described above. However, the first adhesive tape (vinyl tape) 221 of the present modification may have a tape width of at least the length of the first wrapping section 10b as in the first adhesive tape (vinyl tape) 21 of the embodiment, and may have a tape width narrower than the length of the first wrapping section 10b. The first adhesive tape (vinyl tape) 221 of the present modification is wrapped in layers in the first wrap amount that allows generation of the first restoring force. The first wrap amount is the same as the wrap amount of the first adhesive tape (vinyl tape) 121 illustrated in modification 1 described above, and is, for example, 1/4, 1/2 (so-called half wrap), and 3/4 of the tape width of the first adhesive tape (vinyl tape) 221. In this way, the wire harness 3 of the present modification includes the first tape wrapping body 220 in which the first adhesive tape (vinyl tape) 221 is wrapped in layers in the first wrap amount that allows generation of the first restoring force.

In the second tape wrapping body 230 of the present modification, a second adhesive tape 231 is wrapped around the second electric wire portion 12 of the second wrapping section 10c, as in the second tape wrapping body 30 of the embodiment described above (FIGS. 5 and 6). As in the second tape wrapping body 30 of the embodiment, the second tape wrapping body 230 is formed such that the second restoring force for restoring from the bending shape, which is formed by integrating the second tape wrapping body 230 and the second electric wire portion 12 in the second wrapping section 10c, to the shape before bending is smaller than the holding power to keep the electric wire 10, as a single body, in the bending shape.

The second adhesive tape 231 of the present modification is the same vinyl tape as the first adhesive tape (vinyl tape) 221. Furthermore, the second adhesive tape (vinyl tape) 231 of the present modification may have a tape width of at least the length of the second wrapping section 10c as in the second adhesive tape (vinyl tape) 31 of the embodiment, and may have a tape width narrower than the length of the second wrapping section 10c. The second adhesive tape (vinyl tape) 231 preferably has the same tape width as the first adhesive tape (vinyl tape) 221. That is, in the wire harness 3 of the present modification, the first adhesive tape (vinyl tape) 221 and the second adhesive tape (vinyl tape) 231 are preferably the same. The second adhesive tape (vinyl tape) 231 of the present modification is wrapped in layers in the second wrap amount that allows generation of the second restoring force and has less wrap amount than the first wrap amount of the first adhesive tape (vinyl tape) 221. For example, when the first wrap amount of the first adhesive tape (vinyl tape) 221 is 3/4 of the tape width, the second wrap amount is set to 1/4 or the like of the tape width of the second adhesive tape (vinyl tape) 231 having less wrap amount than the above amount. In this way, the wire harness 3 of the present modification includes the second tape wrapping body 230 in which the second adhesive tape (vinyl tape) 231 is wrapped in layers in the second wrap amount that allows generation of the second restoring force and has less wrap amount than the first wrap amount of the first adhesive tape (vinyl tape) 221. For example, in the second tape wrapping body 230, the same vinyl tape as in the first adhesive tape 221 is used as the second adhesive tape 231, and the second adhesive tape (vinyl tape) 231 is wrapped in layers in the second wrap amount having less wrap amount than the first wrap amount of the first adhesive tape (vinyl tape) 221.

In the wire harness 3 of the present modification, as in the wire harness 1 of the embodiment described above, even if the first tape wrapping body 220 and the first electric wire portion 11 are bent from the shape before bending in the first wrapping section 10b, since the first restoring force is greater than the holding power of the electric wire 10 as a single body, the first tape wrapping body 220 and the first electric wire portion 11 attempt to return from the bending shape to the shape before bending. In the wire harness 3, as in the wire harness 1 of the embodiment described above, if the second tape wrapping body 230 and the second electric wire portion 12 are bent from the shape before bending in the second wrapping section 10c, since the second restoring force is smaller than the holding power of the electric wire 10 as a single body, the second tape wrapping body 230 and the second electric wire portion 12 are kept in the bending shape. Therefore, by using the base point 10a as a mark and bending the second tape wrapping body 230 and the second electric wire portion 12 in the second wrapping section 10c, the wire harness 3 can continue to maintain the bending shape until the assembly to the structure begins (FIG. 6). In this exemplification, the second tape wrapping body 230 and the second electric wire portion 12 are bent at the end on the base point 10a side in the second wrapping section 10c.

As described above, in the wire harness 3 of the present modification, the first tape wrapping body 20 and the second tape wrapping body 30 are replaced with the first tape wrapping body 220 and the second tape wrapping body 230, respectively, in the wire harness 1 of the embodiment described above, and the same effect as in the wire harness 1 can be obtained.

Here, in the exemplified wire harness 3, the first adhesive tape (vinyl tape) 221 and the second adhesive tape (vinyl tape) 231 having a tape width narrower than the length of the first wrapping section 10b and a tape width narrower than the length of the second wrapping section 10c, respectively, are used (FIGS. 5 and 6). In the exemplified wire harness 3, the same adhesive tape (vinyl tape) is used for the first adhesive tape (vinyl tape) 221 and the second adhesive tape (vinyl tape) 231 (FIGS. 5 and 6). In the exemplified wire harness 3, the adhesive tape (vinyl tape) is wrapped in layers on the first electric wire portion 11 and the outer peripheral wall at the end on the first electric wire portion 11 side in the first exterior member 51 in the first wrap amount that allows generation of the first restoring force, and the adhesive tape (vinyl tape) is wrapped in layers on the second electric wire portion 12 and the outer peripheral wall at the end on the second electric wire portion 12 side in the second exterior member 52 in the second wrap amount that allows generation of the second restoring force and that has the wrap amount less than the first wrap amount (FIGS. 5 and 6).

### Modification 3

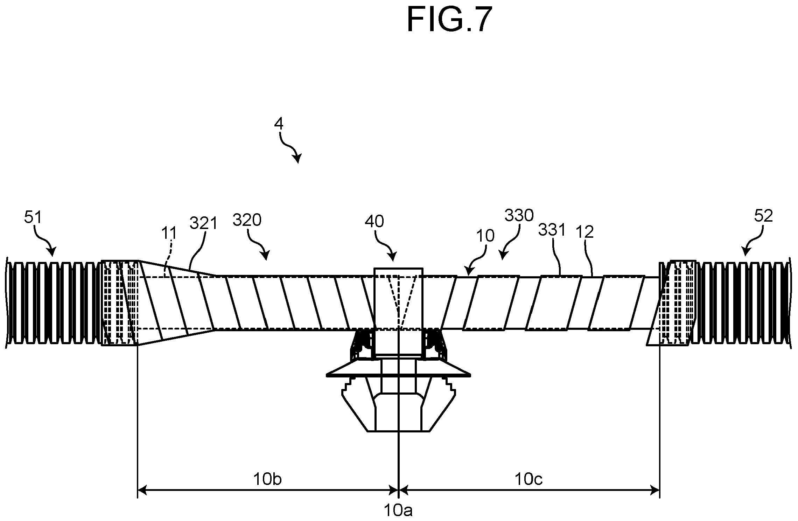

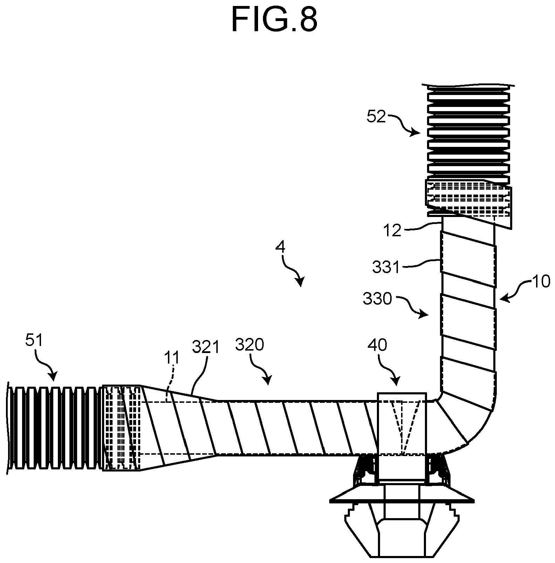

In a wire harness 4 of the present modification, the first tape wrapping body 20 and the second tape wrapping body 30 are replaced with a first tape wrapping body 320 and a second tape wrapping body 330, respectively, in the wire harness 1 of the embodiment described above (FIGS. 7 and 8).

In the first tape wrapping body 320 of the present modification, a first adhesive tape 321 is wrapped around the first electric wire portion 11 of the first wrapping section 10b, as in the first tape wrapping body 20 of the embodiment described above (FIGS. 7 and 8). As in the first tape wrapping body 20 of the embodiment, the first tape wrapping body 320 is formed such that the first restoring force from the bending shape, which is formed by integrating the first tape wrapping body 320 and the first electric wire portion 11 in the first wrapping section 10b, to the shape before bending is greater than the holding power to keep the electric wire 10, as a single body, in the bending shape.

The first adhesive tape 321 of the present modification is a vinyl tape, as in the first adhesive tape 21 of the embodiment described above. However, the first adhesive tape (vinyl tape) 321 of the present modification may have a tape width of at least the length of the first wrapping section 10b as in the first adhesive tape (vinyl tape) 21 of the embodiment, and may have a tape width narrower than the length of the first wrapping section 10b. The first adhesive tape (vinyl tape) 321 of the present modification is wrapped in layers in the wrap amount that allows generation of the first restoring force. The wrap amount is the same as the wrap amount of the first adhesive tape (vinyl tape) 121 illustrated in modification 1 described above and the first wrap amount of the first adhesive tape (vinyl tape) 221 illustrated in modification 2 described above, and is, for example, 1/4, 1/2 (so-called half wrap), and 3/4 of the tape width of the first adhesive tape (vinyl tape) 321. In this way, the wire harness 4 of the present modification includes the first tape wrapping body 320 in which the first adhesive tape (vinyl tape) 321 is wrapped in layers in the wrap amount that allows generation of the first restoring force.

In the second tape wrapping body 330 of the present modification, a second adhesive tape 331 is wrapped around the second electric wire portion 12 of the second wrapping section 10c, as in the second tape wrapping body 30 of the embodiment described above (FIGS. 7 and 8). As in the second tape wrapping body 30 of the embodiment, the second tape wrapping body 330 is formed such that the second restoring force for restoring from the bending shape, which is formed by integrating the second tape wrapping body 330 and the second electric wire portion 12 in the second wrapping section 10c, to the shape before bending is smaller than the holding power to keep the electric wire 10, as a single body, in the bending shape.

A vinyl tape is used for the second adhesive tape 331 of the present modification, as in the first adhesive tape (vinyl tape) 321. Furthermore, the second adhesive tape (vinyl tape) 331 of the present modification has a tape width narrower than the length of the second wrapping section 10c. The second adhesive tape (vinyl tape) 331 of the present modification is wrapped in a rough wrapping state that allows generation of the second restoring force. That is, the second adhesive tape (vinyl tape) 331 of the present modification is wrapped with a gap. In this way, the wire harness 4 of the present modification includes the second tape wrapping body 330 in which the second adhesive tape (vinyl tape) 331 is wrapped in a rough wrapping state that allows generation of the second restoring force.

In the wire harness 4 of the present modification, as in the wire harness 1 of the embodiment described above, even if the first tape wrapping body 320 and the first electric wire portion 11 are bent from the shape before bending in the first wrapping section 10b, since the first restoring force is greater than the holding power of the electric wire 10 as a single body, the first tape wrapping body 320 and the first electric wire portion 11 attempt to return from the bending shape to the shape before bending. In the wire harness 4, as in the wire harness 1 of the embodiment described above, if the second tape wrapping body 330 and the second electric wire portion 12 are bent from the shape before bending in the second wrapping section 10c, since the second restoring force is smaller than the holding power of the electric wire 10 as a single body, the second tape wrapping body 330 and the second electric wire portion 12 are kept in the bending shape. Therefore, by using the base point 10a as a mark and bending the second tape wrapping body 330 and the second electric wire portion 12 in the second wrapping section 10c, the wire harness 4 can continue to maintain the bending shape until the assembly to the structure begins (FIG. 8). In this exemplification, the second tape wrapping body 330 and the second electric wire portion 12 are bent at the end on the base point 10a side in the second wrapping section 10c.

As described above, in the wire harness 4 of the present modification, the first tape wrapping body 20 and the second tape wrapping body 30 are replaced with the first tape wrapping body 320 and the second tape wrapping body 330, respectively, in the wire harness 1 of the embodiment described above, and the same effect as in the wire harness 1 can be obtained.

Here, in the exemplified wire harness 4, the first adhesive tape (vinyl tape) 321 and the second adhesive tape (vinyl tape) 331 having a tape width narrower than the length of the first wrapping section 10b and a tape width narrower than the length of the second wrapping section 10c, respectively, are used (FIGS. 7 and 8). In the exemplified wire harness 4, the same adhesive tape (vinyl tape) is used for the first adhesive tape (vinyl tape) 321 and the second adhesive tape (vinyl tape) 331 (FIGS. 7 and 8). In the exemplified wire harness 4, the adhesive tape (vinyl tape) is wrapped in layers on the first electric wire portion 11 and the outer peripheral wall at the end on the first electric wire portion 11 side in the first exterior member 51 in the wrap amount that allows generation of the first restoring force, and the adhesive tape (vinyl tape) is wrapped on the second electric wire portion 12 and the outer peripheral wall at the end on the second electric wire portion 12 side in the second exterior member 52 in a rough wrapping state that allows generation of the second restoring force (FIGS. 7 and 8).

Since the bending shape is maintained in the second wrapping section until the assembly to the structure begins, the wire harness according to the present embodiment can maintain the provisional routing shape before assembly.

## Claims

1. A wire harness (1, 2, 3, 4) comprising:
an electric wire (10);
a first tape wrapping body (20, 120, 220, 320) in which a first adhesive tape (21, 121, 221, 321) is wrapped around a first electric wire portion (11) of a first wrapping section (10b) directed to a one side from a base point (10a) in an axial direction of the electric wire (10); and
a second tape wrapping body (30, 130, 230, 330) in which a second adhesive tape (31, 131, 231, 331) is wrapped around a second electric wire portion (12) of a second wrapping section (10c) directed to another side from the base point (10a) in the axial direction of the electric wire (10), wherein
the first tape wrapping body (20, 120, 220, 320) is formed such that first restoring force for restoring from a bending shape, which is formed by integrating the first tape wrapping body (20, 120, 220, 320) and the first electric wire portion (11) in the first wrapping section (10b), to a shape before bending is larger than holding power to keep the electric wire (10), as a single body, in the bending shape, and
the second tape wrapping body (30, 130, 230, 330) is formed such that second restoring force for restoring from a bending shape, which is formed by integrating the second tape wrapping body and the second electric wire portion (12) in the second wrapping section (10c), to a shape before bending is smaller than the holding power.

2. The wire harness (1) according to claim 1, wherein
the first adhesive tape (21) is a vinyl tape,
the second adhesive tape (31) is a nonwoven tape,
in the first tape wrapping body (20), the first adhesive tape (21) having a tape width of at least a length of the first wrapping section (10b) is wrapped with a number of turns that allows generation of the first restoring force, and
in the second tape wrapping body (30), the second adhesive tape (31) having a tape width of at least a length of the second wrapping section (10c) is wrapped with a number of turns that allows generation of the second restoring force.

3. The wire harness (2) according to claim 1, wherein
the first adhesive tape (121) is a vinyl tape,
the second adhesive tape (131) is a nonwoven tape,
in the first tape wrapping body (120), the first adhesive tape (121) is wrapped in layers in a wrap amount that allows generation of the first restoring force, and
in the second tape wrapping body (130), the second adhesive tape (131) is wrapped in layers in a wrap amount that allows generation of the second restoring force.

4. The wire harness (3) according to claim 1, wherein
the first adhesive tape (221) and the second adhesive tape (231) are an identical vinyl tape,
in the first tape wrapping body (220), the first adhesive tape (221) is wrapped in layers in a first wrap amount that allows generation of the first restoring force, and
in the second tape wrapping body (230), the second adhesive tape (231) is wrapped in layers in a second wrap amount that allows generation of the second restoring force and that has a less wrap amount than the first wrap amount.

5. The wire harness (4) according to claim 1, wherein
the first adhesive tape (321) and the second adhesive tape (331) are an identical vinyl tape,
in the first tape wrapping body (320), the first adhesive tape (321) is wrapped in layers in a wrap amount that allows generation of the first restoring force, and
in the second tape wrapping body (330), the second adhesive tape (331) is wrapped in a rough wrapping state that allows generation of the second restoring force.

6. The wire harness (1, 2, 3, 4) according to any one of claims 1 to 5, further comprising:
a clamp (40) assembled to the base point (10a) of the electric wire (10).

7. The wire harness (1, 2, 3, 4) according to any one of claims 1 to 5, further comprising:
a first exterior member (51) that is harder than the first adhesive tape (21, 121, 221, 321) and the second adhesive tape (31, 131, 231, 331), and houses one side of the electric wire (10) with respect to the first electric wire portion (11) in the axial direction; and
a second exterior member (52) that is harder than the first adhesive tape (21, 121, 221, 321) and the second adhesive tape (31, 131, 231, 331), and houses the another side of the electric wire (10) with respect to the second electric wire portion in the axial direction, wherein
the first adhesive tape (21, 121, 221, 321) is wrapped around the first electric wire portion (11) and an outer peripheral wall at an end on a side of the first electric wire portion (11) in the first exterior member (51), and
the second adhesive tape (31, 131, 231, 331) is wrapped around the second electric wire portion (12) and an outer peripheral wall at an end on a side of the second electric wire portion (12) in the second exterior member (52) .
